# EUROPEAN PATENT APPLICATION

(11) **EP 2 068 540 A1**
(43) Date of publication of application: **10.06.2009**
(21) Application number: 07807090.1
(22) Date of filing: 11.09.2007
(51) Int. Cl.: H04M 1/66

(54) **MOBILE TERMINAL DEVICE, KEY OPERATION LOCK METHOD IN THE MOBILE TERMINAL DEVICE, AND PROGRAM**

(30) Priority: 28.09.2006 JP 2006263925
(71) Applicant: NEC Corporation, Minato-ku Tokyo 108-8001 (JP)
(72) Inventor: MORITOU, Takashi, Tokyo 108-8001 (JP)
(74) Representative: Betten & Resch
(86) International application number: PCT/JP2007/067681
(87) International publication number: WO 2008/038515

(57) **Abstract**

The usability of a portable terminal device having a key operation lock function is increased. If there is not a key operation over a predetermined period of time, a lock control unit (23) receives a timeout signal input from a timer (22). If the housings are closed, the lock control unit (23) receives a detection result indicating that the housings are closed from an open/close detecting unit (6). If the timeout signal is input, or if the detection result supplied from the open/close detecting unit (6) indicates that the housings are closed, the lock control unit (23) determines that a lock instruction has been issued, and determines whether the state of the portable telephone device satisfies a predetermined condition. If the predetermined condition is satisfied, the lock control unit (23) outputs a key operation lock activation signal to a control unit (25). If the predetermined condition is not satisfied, the lock control unit (23) waits for the predetermined condition to be satisfied before outputting a key operation lock activation signal.

## Description

### Technical Field

The present invention relates to a portable terminal device such as a portable telephone device or a PHS (Personal Handyphone System) that has a key operation lock function. More particularly, the present invention relates to a portable terminal device that has higher usability, being capable of promptly controlling whether to enable the key operation lock function in accordance with the state of the portable terminal device when a lock instruction is issued.

### Background Art

A conventional portable terminal device such as a portable telephone device has a key operation lock function to prevent unauthorized use by others, leakage of confidential data such as phonebook data and mail, a wrong key operation that might occur while the portable terminal device is carried in a handbag or pocket, and the like.

In a conventional general-purpose portable terminal device having a key operation lock function, the key operation lock function is enabled when a user performs a certain key operation to enable the key operation lock function. Other than that, there have been a portable terminal device that enables the key operation lock function when the portable terminal device is folded (see, Patent Documents 1 and 2, for example), a portable terminal device that enables the key operation lock function if there is not a key operation over a predetermined period of time (see, Patent Document 3, for example), and a portable terminal device that enables the key operation lock function after a certain period of time has passed since the start of a music reproducing operation (see, Patent Document 4, for example).
Patent Document 1: Japanese Patent Application Laid-Open (JP-A) No. 9-266502
Patent Document 2: JP-A No. 2001-217924
Patent Document 3: JP-A No. 2001-320477
Patent Document 4: JP-A No. 2005-167455

### Disclosure of the Invention

### Problem to be solved by the Invention

In any of the portable terminal devices disclosed in Patent Documents 1 through 4, the key operation lock function can be enabled, without the user performing a particular key operation. Accordingly, users rarely or never inadvertently forget to lock keys.

In any of the portable terminal devices disclosed in Patent Documents 1 and 2, however, the key operation lock function is promptly enabled when an event (a lock instruction) for enabling the key operation lock function occurs as the portable terminal device is folded. In the portable terminal device disclosed in Patent Document 3, the key operation lock function is promptly enabled when an event (a lock instruction) for enabling the key operation lock function occurs as the predetermined period of time has passed without a key operation. In the portable terminal device disclosed in Patent Document 4, the key operation lock function is promptly enabled when an event (a lock instruction) for enabling the key operation lock function occurs as the predetermined period of time has passed since the start of a music reproducing operation. In short, any of the conventional portable terminal devices unconditionally activates the key operation lock function whenever a lock instruction is issued. Therefore, the usability becomes poorer for users, depending on the state of the terminal device at the point when a lock instruction is issued. For example, if a lock instruction is issued while a tune or a movie is being reproduced, the key operation lock function is promptly enabled, and the sound volume and the likes cannot be adjusted thereafter.

### [Object of the invention]

Therefore, the object of the present invention is to provide a user-friendly portable terminal device that can promptly control whether to enable a key operation lock function in accordance with the state of the portable terminal device when a lock instruction is issued.

### Means for solving the problems

A first portable terminal device according to the present invention includes: a lock control unit that determines whether the device satisfies a predetermined condition when a lock instruction is issued, enables a key operation lock function when the device satisfies the predetermined condition, and waits for the predetermined condition to be satisfied before enabling the key operation lock function when the device does not satisfy the predetermined condition.

A second portable terminal device according to the present invention is **characterized in that** the predetermined condition is that a specified application program is not activated in the first portable terminal device.

A third portable terminal device according to the present invention is **characterized in that** the key operation lock function is a function to restrict acceptable events in the first portable terminal device.

A fourth portable terminal device according to the present invention further includes: a lock instructing unit that issues the lock instruction to the lock control unit when there is not a key operation over a predetermined period of time in the first portable terminal device.

A fifth portable terminal device according to the present invention further includes: a lock instructing unit that issues the lock instruction to the lock control unit when the housings of the portable terminal device are closed in the first portable terminal device.

A sixth portable terminal device according to the present invention further includes: an unlock key that is provided on a side face of a housing; and an authenticating unit that performs an authenticating operation when the unlock key is pressed, and instructs the lock control unit to disable the key operation lock function when the authenticating operation is successful in the first portable terminal device.

A key operation lock method to be utilized in the first portable terminal device according to the present invention includes the steps of: determining whether the device satisfies a predetermined condition when a lock instruction is issued, enabling a key operation lock function when the device satisfies the predetermined condition, and waiting for the predetermined condition to be satisfied before enabling the key operation lock function when the device does not satisfy the predetermined condition.

A key operation lock method to be utilized in the second portable terminal device according to the present invention is **characterized in that** the predetermined condition is that a predetermined application program is not activated in the first key operation lock method.

A first program according to the present invention causes a computer to function as a lock control unit that performs: determining whether the device satisfies a predetermined condition when a lock instruction is issued, enabling a key operation lock function when the device satisfies the predetermined condition, and waiting for the predetermined condition to be satisfied before enabling the key operation lock function when the device does not satisfy the predetermined condition.

A second program according to the present invention is **characterized in that** the predetermined condition is that a specified application program is not activated in the first program.

### [Functions]

When a lock instruction is issued because a key operation has not been performed over a certain period of time or the housings are closed or the like, the lock control unit determines whether its own device satisfies a predetermined condition. The predetermined condition may be that a specified application program is not in operation, the portable terminal device is not in a predetermined state, or the like. If the portable terminal device satisfies the predetermined condition, the lock control unit promptly enables the key operation lock function. If the portable terminal device does not satisfies the predetermined condition, the lock control unit waits for the predetermined condition to be satisfied before enabling the key operation lock function. When the key operation lock function is enabled, acceptable events are restricted.

### Effect of the Invention

According to the present invention, the usability of a portable terminal device can be increased, because of the lock control unit that determines whether its own device satisfies a predetermined condition when a lock instruction is issued, and enables the key operation lock function if the device satisfies the predetermined condition, but waits for the predetermined condition to be satisfied before enabling the key operation lock function if the device does not satisfy the predetermined condition. For example, where the predetermined condition is that the application program for music reproduction is not in operation, the key operation lock function is not enabled even if a lock instruction is issued while music is being reproduced. Accordingly, the user can change the sound volume or the like, and the usability is increased.

The following is a description of a preferred embodiment for carrying out the present invention, with reference to the accompanying drawings.

### Best Mode for Carrying out the Invention

### [Explanation of the structure of the exemplary embodiment]

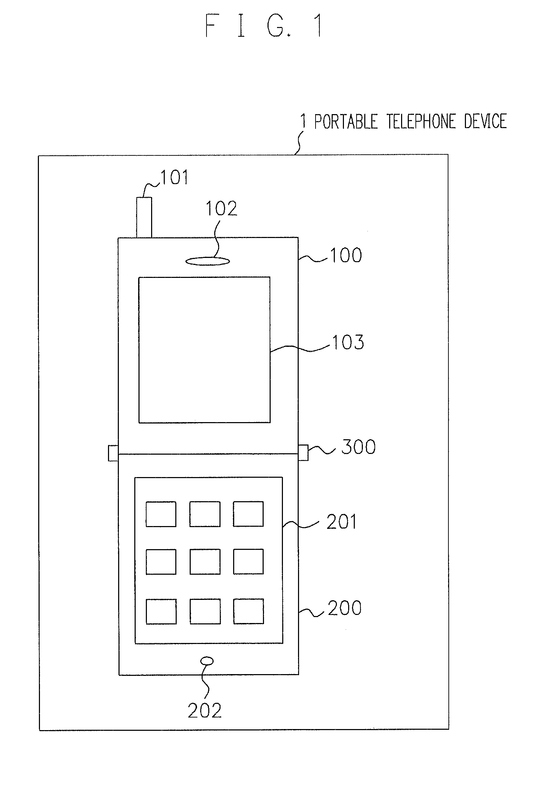

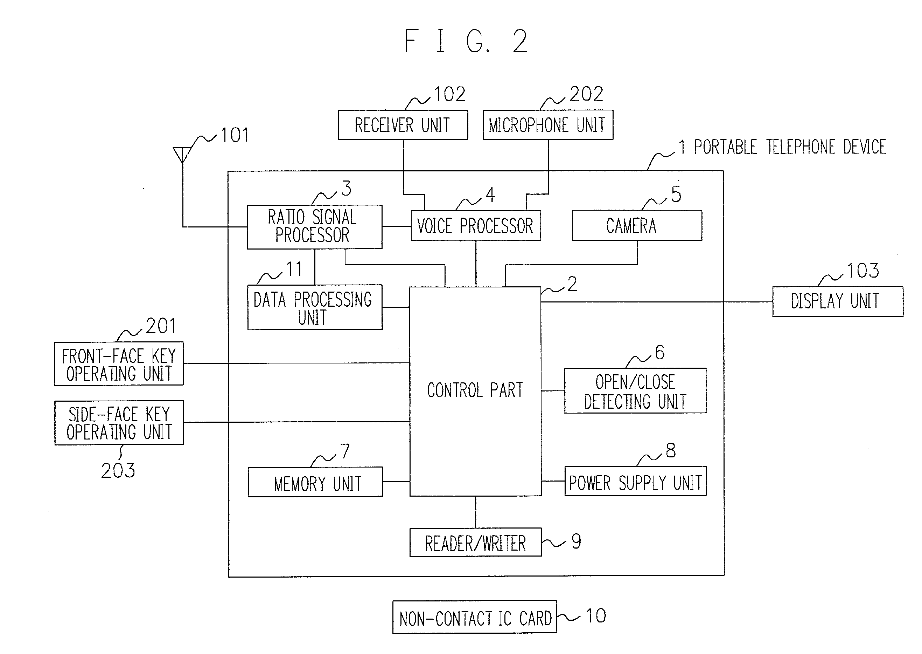

Fig. 1 is an external view of an example of a portable telephone device 1 that has a fold-type structure to which the present invention is applied. As shown in Fig. 1, the portable telephone device 1 includes a first housing 100 and a second housing 200, and the first housing 100 and the second housing 200 are rotatably coupled to each other with a hinge unit 300. An antenna 101, a receiver unit 102, and a display unit 103 formed of a LCD are provided on the first housing 100. A front-face key operating unit 201 including numeric keypads, and a microphone unit 202 are provided on the second housing 200. Although not shown in Fig. 1, a side-face key operating unit 203 (see Fig. 2) including an unlock key and the likes is provided on a side face of the second housing 200.

Fig. 2 is a block diagram showing an example structure of the portable telephone device 1. The portable telephone device 1 includes the antenna 101, the receiver unit 102, the display unit 103, the front-face key operating unit 201, the microphone unit 202, and the side-face key operating unit 203. The portable telephone device 1 further includes the following in the housings: a control part 2 that is realized by a CPU; a radio signal processor 3 that performs modulating and demodulating operations; a voice processor 4 that performs processing for voices; a camera 5; a data processing unit 11 that performs processing for data; an open/close detecting unit 6 that detects the open/close state the housings 100 and 200, and outputs the detection result to the control part 2; a memory unit 7; a power supply unit 8 that supplies an operating voltage to each of the components of the device; and a reader/writer 9 that performs data reading and writing for a non-contact IC card 10. The user ID for authenticating the user of the portable telephone device 1 is registered in the non-contact IC card 10.

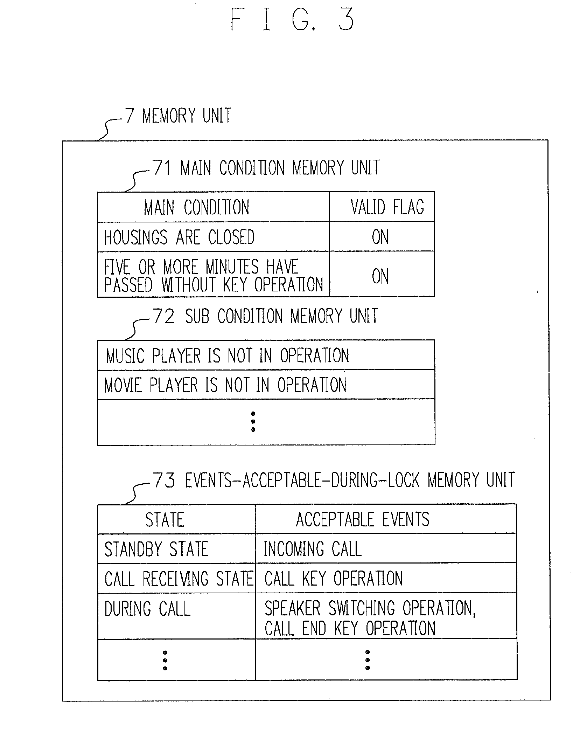

Fig. 3 shows example contents of the memory unit 7. As shown in Fig. 3, the memory unit 7 includes a main condition memory unit 71, a sub condition memory unit 72, and an events-acceptable-during-lock memory unit 73.

Main conditions that are the conditions for determining whether a lock instruction has been issued are registered in the main condition memory unit 71. As shown in Fig. 3, the main conditions and valid flags indicating whether the main conditions are valid (the flags are ON when the main conditions are valid) are registered in the main condition memory unit 71. In the example case shown in Fig. 3, the valid flag for the main condition "the housings are closed" and the valid flag for the main condition "a no-key-operation period has continued five minutes or more" are both ON. Accordingly, if one of the two main conditions is satisfied, it is determined that there is an issued lock instruction. The valid flags can be changed by the user. For example, the valid flag for the main condition "the housings are closed" may be switched ON, while the valid flag for the main condition "a no-key-operation period has continued five minutes or more" may be switched OFF. In such a case, it is determined that there is an issued lock instruction, only if the main condition "the housings are closed" is satisfied. The no-key-operation period may also be changed by the user.

Sub conditions that are the conditions for determining whether the portable telephone device 1 is in such a state that a key operation lock function is enabled are registered in the sub condition memory unit 72. As shown in Fig. 3, sub conditions such as "the music player (an application program) is not in operation" and "the movie player (an application program) is not in operation" are registered in the sub condition memory unit 72. Accordingly, the portable telephone device 1 is determined to be in such a state that the key operation lock function is enabled, only if all the sub conditions are satisfied. The contents of the sub condition memory unit 72 are not limited to the examples shown in Fig. 3. For example, the registered sub conditions "no calls are being received", "no calls are being made", and the likes may be registered. If such sub conditions are registered, the key operation lock function is not enabled before the portable telephone device 1 is put into a "standby state", even if a lock instruction is issued while a call is being received and a call is being made.

The events that can be accepted when the key operation lock function is in an enabled state are registered in the events-acceptable-during-lock memory unit 73 for each state of the portable telephone device 1. The events that can be accepted after the key operation lock function is enabled are more restricted than the events that can be accepted before the key operation lock function is enabled. In the example shown in Fig. 3, when the portable telephone device 1 is in the "standby state", the events that can be accepted are restricted only to "incoming call". When the portable telephone device 1 is in a "receiving state", the events that can be accepted are restricted only to "call key operation". When the portable telephone device 1 is "during a call", the events that can be accepted are restricted only to "speaker switching operation" and "call-end key operation".

The contents of the events-acceptable-during-lock memory unit 73 are not limited to the examples shown in Fig. 3. For example, in a case where "incoming mail" is registered as an event that can be accepted in a "standby state", mails can be received even if the key operation lock function is in an enabled state. If "mail viewing operation" is not registered as an event that can be accepted, mail viewing can be prohibited. Further, if "alarm notification" is registered as an event that can be accepted in each state, an alarm can be displayed at a designated time. If "GPS location obtaining operation" is registered as an event that can be accepted in each state, the present location can be obtained without any restrictions due to the key operation lock function.

Although not shown in Fig. 3, the memory unit 7 further includes an events-acceptable-during-unlock memory unit in which events that can be accepted while the key operation lock is not in an enabled state are registered for each state of the portable telephone device 1, and a user ID memory unit in which the user ID is registered.

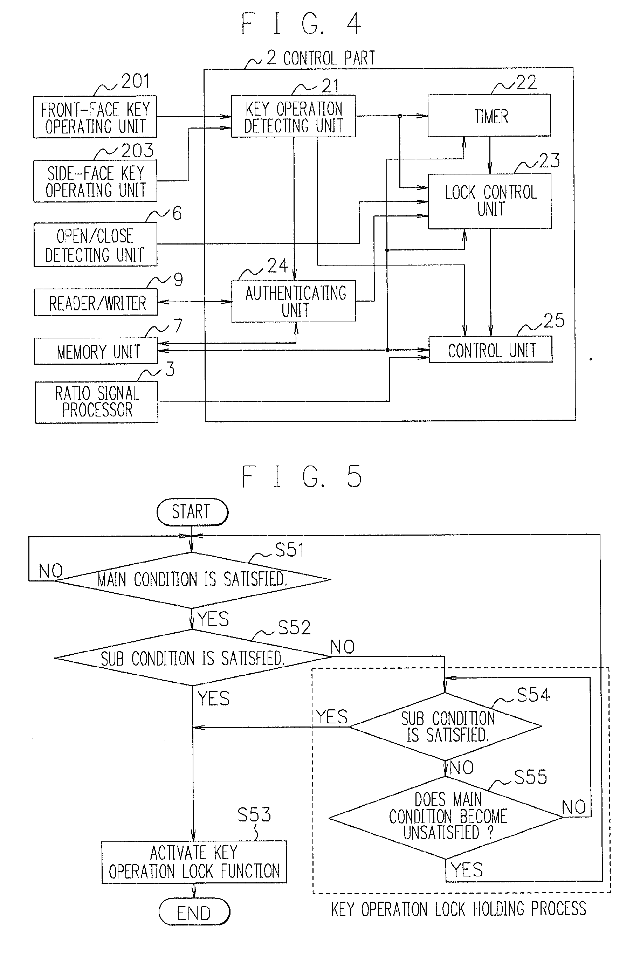

Fig. 4 is a block diagram showing an example structure of the control part 2. This structure includes a key operation detecting unit 21, a timer 22, a lock control unit 23, an authenticating unit 24, and a control unit 25.

When sensing that a key of the front-face key operating unit 201 or the side-face key operating unit 203 is operated, the key operation detecting unit 21 outputs a code corresponding to the operated key to the control unit 25. Every time detecting a key operation, the key operation detecting unit 21 outputs a reset signal to the timer 22 and the lock control unit 23. When sensing that the unlock key of the side-face key operating unit 203 is operated, the key operation detecting unit 21 instructs the authenticating unit 24 to start an authenticating.

The timer 22 is reset every time the reset signal is input from the key operation detecting unit 21. When the measurement time reaches the period of time (five minutes in the example shown in Fig. 3) registered in the main condition memory unit 71, the timer 22 outputs a timeout signal to the lock control unit 23. In other words, when the no-key-operation period reaches the time registered in the main condition memory unit 71, the timer 22 outputs the timeout signal to instruct the lock control unit 23 to start locking.

When receiving an authentication start instruction from the key operation detecting unit 21, the authenticating unit 24 uses the reader/writer 9 to read the user ID from the non-contact IC card 10 owned by the user, and compares the read user ID with the user ID registered in the memory unit 7, so as to authenticate the user. If the user is authenticated, the authenticating unit 24 outputs an unlock instruction to the lock control unit 23.

The lock control unit 23 has the following functions:

The function to determine that a lock instruction has been issued in a case where a timeout signal is output from the timer 22, and the valid flag corresponding to the main condition "a no-key-operation period has continued five minutes or more" registered in the main condition memory unit 71 is ON, or in a case where the detection result supplied from the open/close detecting unit 6 indicates that the housings are closed, and the valid flag corresponding to the main condition "the housings are closed" registered in the main condition memory unit 71 is ON;

The function to: determine whether all the sub conditions registered in the sub condition memory unit 72 are satisfied in a case where a lock instruction has been issued; output a key operation lock activation signal to the control unit 25 if all the sub conditions are satisfied; and, if not all the sub conditions are satisfied, output a key operation lock activation signal to the control unit 25 after all the sub conditions are satisfied; and

The function to output a key operation unlock signal to the control unit 25, when an unlock instruction is input from the authenticating unit 24.

Every time an event occurs, the control unit 25 refers to the events-acceptable-during-lock memory unit 73, and determines whether the event is acceptable, between the time when a key operation lock activation signal is input from the lock control unit 23 and the time when a key operation unlock signal is input or during the time the key operation lock function is enabled. If the event is determined to be acceptable, the event is accepted, and a state transition occurs if necessary.

The control part 2 can be embodied by a computer (CPU), and is formed in the following manner if embodied by a computer. A recording medium such as a disk or a semiconductor memory on which a program for causing a computer to function as the key operation detecting unit 21, the timer 22, the lock control unit 23, the authenticating unit 24, and the control unit 25 is prepared, and the computer reads the program. According to the program, the computer controls operations of its own, and embodies the key operation detecting unit 21, the timer 22, the lock control unit 23, the authenticating unit 24, and the control unit 25.

### [Explanation of operations in accordance with the exemplary embodiment]

Next, the operations in accordance with this exemplary embodiment are described in detail.

### [Operation to be performed when the key operation lock function is activated]

First, the operation to be performed when the key operation lock function is activated is described. In a case where the user of the portable telephone device 1 does not perform a key operation over a predetermined period of time (five minutes in the example shown in Fig. 3), the lock control unit 23 in the control part 2 receives a timeout signal input from the timer 22. In a case where the user closes the housings, the lock control unit 23 receives a detection result indicating that the housings are closed from the open/close detecting unit 6.

In a case where a timeout signal is input from the timer 22, or where a detection result indicating that the housings are closed is input from the open/close detecting unit 6, the lock control unit 23 determines that a main condition is satisfied (a lock instruction has been issued) (step S51 of Fig. 5), if the corresponding valid flag registered in the main condition memory unit 71 is ON. In a case where the contents of the main condition memory unit 71 are the same as those shown in Fig. 3, the lock control unit 23 determines that a main condition is satisfied when a timeout signal is input from the timer 22 or when a detection result indicating that the housings are closed is input from the open/close detecting unit 6.

If a main condition is determined to be satisfied ("YES" in step S51), the lock control unit 23 determines whether the sub conditions are satisfied (step S52). More specifically, the lock control unit 23 refers to the sub condition memory unit 72. If all the sub conditions registered in the sub condition memory unit 72 are satisfied, the lock control unit 23 determines that the sub conditions are satisfied. For example, in a case where the contents of the sub condition memory unit 72 are the same as those shown in Fig. 3, the lock control unit 23 determines that the sub conditions are satisfied if the "music player" as an application program and the "operation player" as an application program are both not in operation.

If the sub conditions are determined to be satisfied ("YES" in step S52), the lock control unit 23 outputs a key operation lock activation signal to the control unit 25 (step S53).

If the sub conditions are determined not to be satisfied ("NO" in step S52), the lock control unit 23 performs a key-operation lock holding process. In the key-operation lock holding process, the lock control unit 23 waits for the sub conditions to be satisfied. When the sub conditions are satisfied ("YES" in step S54), the lock control unit 23 outputs a key operation lock activation signal to the control unit 25 (step S53). If a main condition becomes unsatisfied ("YES" in step S55) before the sub conditions are satisfied, the lock control unit 23 returns to the procedure of step S51, and waits for a main condition to be satisfied. The lock control unit 23 can detect that a main condition becomes unsatisfied, based on a reset signal that is input from the key operation detecting unit 21.

### [Operation to be performed when the key operation lock function is in an enabled state]

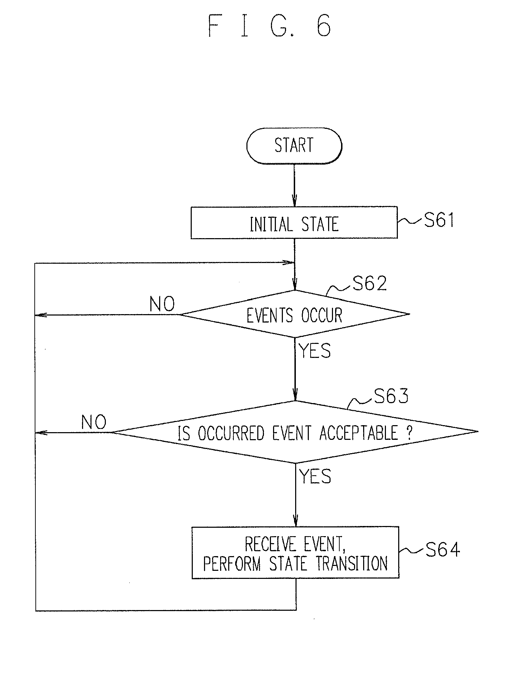

Next, the operation to be performed when the key operation lock function is in an enabled state is described. When the power is turned on in the portable telephone device 1, the control unit 25 starts the operation illustrated in the flowchart of Fig. 6, and transits to an initial state (a standby state) (step S61).

When an event such as an incoming call or a key operation occurs after that ("YES" in step S62), the control unit 25 determines whether the event is acceptable (step S63). While the key operation lock function is in an enabled state, the control unit 25 refers to the events-acceptable-during-lock memory unit 73, and determines whether the event is acceptable. While the key operation lock function is not in an enabled state, the control unit 25 refers to the events-acceptable-during-unlock memory unit (not shown), and determines whether the event is acceptable.

If the event is determined to be acceptable ("YES" in step S63), the control unit 25 accepts the event, and performs a state transition if necessary (step S64). After that, the control unit 25 returns to step S62, and waits for a new event to occur. If the event is determined not to be acceptable ("NO" in step S63), the control unit 25 returns to step S62, and waits for a new event to occur.

### [Operation to be performed when the key operation lock function is disabled]

Next, the operation to be performed when the key operation lock function is disabled is described. To disable the key operation lock function, the user brings the non-contact IC card 10 having the user ID of the user recorded thereon close to the portable telephone device 1. After that, the user presses the unlock key provided in the side-face key operating unit 203. Detecting that the unlock key is pressed, the key operation detecting unit 21 in the control part 2 instructs the authenticating unit 24 to start an authenticating operation.

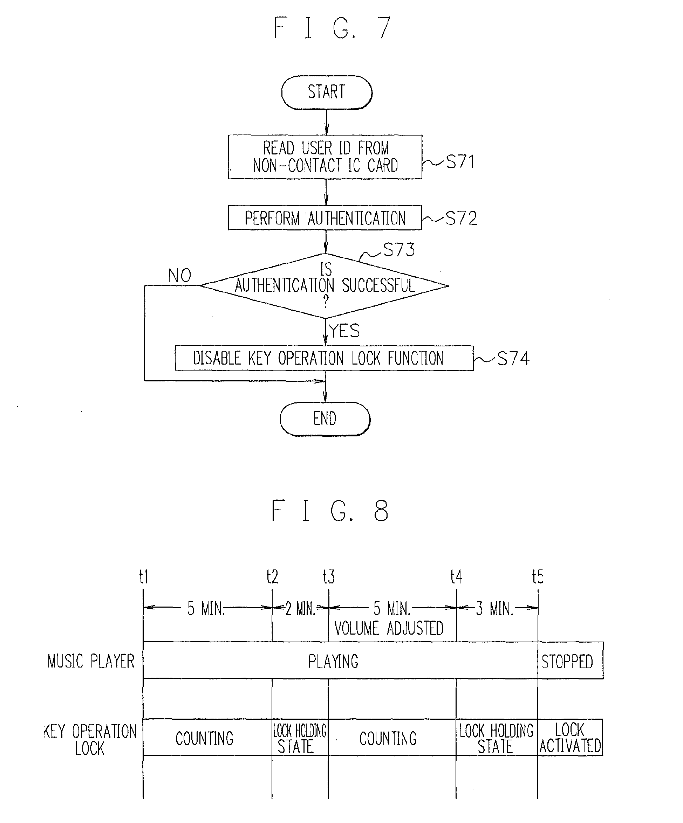

As shown in the flowchart of Fig. 7, the authenticating unit 24 uses the reader/writer 9 to read the user ID from the non-contact IC card 10 (step S71). The authenticating unit 24 then compares the read user ID with the user ID registered in the memory unit 7, and performs user authentication (step S72). If the user is authenticated ("YES" in step S73), the authenticating unit 24 outputs a key operation unlock signal to the control unit 25 (step S74). If the user is not authenticated ("NO" in step S73), the authenticating unit 24 ends the operation. In this exemplary embodiment, user authentication is performed based on the user ID registered in the non-contact IC card 10. However, it is also possible to perform user authentication based on a photograph of a user's face that is taken by the camera 11 when the unlock key is pressed and a photograph of a user's face registered beforehand in the memory unit 7.

Next, the operations in accordance with this exemplary embodiment are described through specific examples.

As shown in Fig. 8, at time t1, it is assumed that the user activates the music player as an application program for reproducing music. As the user presses the key to activate the music player at time t1, the key operation detecting unit 21 detects the key operation, and applies a reset signal to the timer 22. Receiving the reset signal, the timer 22 starts a counting operation. When the measurement time reaches the time (five minutes) registered in the main condition memory unit 71 at time t2, the timer 22 outputs a timeout signal to the lock control unit 23.

Receiving the timeout signal from the timer 22 at time t2, the lock control unit 23 determines whether a main condition is satisfied (step S51), as shown in the flowchart of Fig. 5. If the corresponding valid flag in the main condition memory unit 71 is ON, the lock control unit 23 determines that a main condition is satisfied. The lock control unit 23 then refers to the sub condition memory unit 72, and determines whether the sub condition is satisfied (step S52). If the sub condition "the music player is not in operation" is registered in the sub condition memory unit 72, the lock control unit 23 determines that the sub condition is not satisfied ("NO" in step S52), and performs the key-operation lock holding process (steps S54 and S55). Accordingly, the key operation lock function is not in an enabled state at this point.

If the user performs a key operation to change the sound volume at time t3, the sound volume is changed since the key operation lock function is not in an enabled state at this point. The key operation detecting unit 21 then detects the key operation, and applies a reset signal to the timer 22 and the lock control unit 23. As a result, the lock control unit 23 determines that the main condition becomes unsatisfied ("NO" in step S55), and returns to the procedure of step S51. The timer 22 starts a counting operation. When the measurement time becomes five minutes at time t4, the timer 22 outputs a timeout signal to the lock control unit 23. Upon receipt of the timeout signal, the lock control unit 23 determines that the main condition is satisfied (step S51 of Fig. 5), and then determines whether the sub condition is satisfied (step S52). Since the music player is in operation at this point, the lock control unit 23 determines that the sub condition is not satisfied ("NO" in step S52), and performs the key-operation lock holding process (steps S54 and S55). When the music reproduction ends at time t5, and the music player comes to a stop, the lock control unit 23 determines that the sub condition is satisfied ("YES" in step S54), and outputs a key operation lock signal to the control unit 25 (step S53). After that, the key operation lock function is in an enabled state.

In the example operation illustrated in Fig. 8, even if a main condition is satisfied (if a lock instruction is issued), the key operation lock function is not enabled while the music player as an application program is in operation. Accordingly, after a lock instruction is issued, the sound volume can be changed, and higher usability can be achieved.

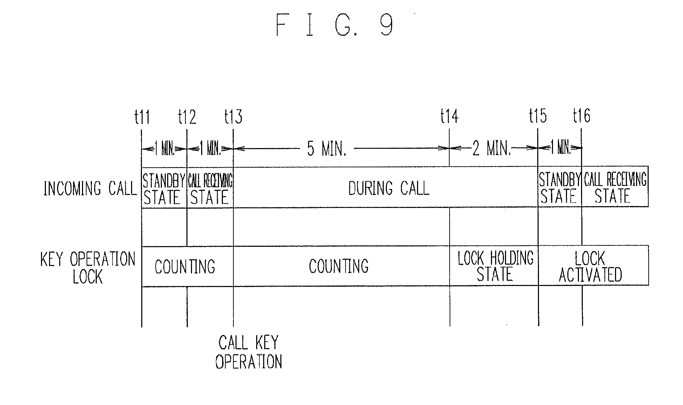

Referring now to Fig. 9, another specific example is described. At time t11, the timer 22 starts a counting operation. One minute later, there is an incoming call at time t12, and another one minute later, the user presses the call key at time t13. As the user presses the call key at time t13, the key operation detecting unit 21 detects the key operation, and outputs a reset signal to the timer 22. The timer 22 then starts counting. When the measurement time reaches the time (five minutes) registered in the main condition memory unit 71 at time t14, the timer 22 outputs a timeout signal to the lock control unit 23.

As the timeout signal is input from the timer 22 at time t14, the lock control unit 23 determines whether a main condition is satisfied (step S51), as shown in the flowchart of Fig. 5. If the corresponding valid flag in the main condition memory unit 71 is ON, the lock control unit 23 determines that the main condition is satisfied. After that, the lock control unit 23 refers to the sub condition memory unit 72, and determines whether the sub conditions are satisfied (step S52). If the sub conditions "being not in a call receiving state" and "being not during a call" are registered in the sub condition memory unit 72, the lock control unit 23 determines that the sub conditions are not satisfied ("NO" in step S52), and performs the key-operation lock holding process (steps S54 and S55). Accordingly, the key operation lock function is not in an enabled state at this point.

When the call ends at time t15, the lock control unit 23 determines that the sub conditions are satisfied ("YES" in step S54), and outputs a key operation lock activation signal to the control unit 25 (step S53). As the call ends, the portable telephone device 1 is put into a standby state. If an event "incoming call" occurs ("YES" in step S62 of Fig. 6) at time t16 when the key operation lock function is in an enabled state, and the portable telephone device 1 is in a "standby state", the control unit 25 refers to the events-acceptable-during-lock memory unit 73, and determines whether the event "incoming call" is acceptable (step S63). If the event "incoming call" is registered in association with the state "standby state" in the events-acceptable-during-lock memory unit 73, the control unit 25 accepts the event "incoming call", and causes the state of the portable telephone device 1 to transit to a "call receiving state (step S64).

In the example operation illustrated in Fig. 9, after the key operation lock function is enabled, an incoming call is accepted, and higher usability can be achieved accordingly.

### [Effects of the exemplary embodiment]

In accordance with this exemplary embodiment, the usability of a portable telephone device can be made higher, because of the lock control unit 23 that determines whether its own device satisfies a predetermined condition when a lock instruction is issued, and enables the key operation lock function if the device satisfies the predetermined condition, but waits for the predetermined condition to be satisfied before enabling the key operation lock function if the device does not satisfy the predetermined condition. For example, where the predetermined condition is that the application program for music reproduction is not in operation, the key operation lock function is not enabled even if a lock instruction is issued while music is being reproduced. Accordingly, the user can change the sound volume or the like, and the usability can be increased.

Also, this exemplary embodiment includes the lock instructing unit (the timer 22) that issues a lock instruction to the lock control unit 23 if a key operation is not performed over a certain period of time. Accordingly, users do not forget to lock the keys.

Further, this exemplary embodiment includes the unlock key provided on a side face of the housings, and the authenticating unit 24 that performs authentication when the unlock key is pressed, and instructs the lock control unit 23 to disable the key operation lock function if the authentication is successful. Accordingly, the key operation lock function can be disabled while the housings are closed, and higher operability can be achieved.

### Industrial Applicability

The present invention can be applied to portable terminal devices such as portable telephone devices and PHSs that have the key operation lock function. With the present invention being applied to a portable terminal device, the portable terminal device can provide higher usability.

This application is based upon and claims the benefit of priority from Japanese patent application No. 2006-263925, filed on September 28, 2006, the disclosure of which is incorporated herein in its entirety by reference.

### Brief Description of the Drawings

Fig. 1 is an external view of an example of the portable telephone device 1 having a fold-type structure to which the present invention is applied;
Fig. 2 is a block diagram showing an example structure of the portable telephone device 1;
Fig. 3 shows the contents of the memory unit 7;
Fig. 4 shows an example structure of the control part 2;
Fig. 5 is a flowchart showing a process example to be performed by the lock control unit 23;
Fig. 6 is a flowchart showing a process example to be performed by the control unit 25;
Fig. 7 is a flowchart showing an example operation to be performed by the authenticating unit 24;
Fig. 8 illustrates an operation to be performed in a case where a lock instruction is issued (in a case that timer 22 times out), while music is being played; and
Fig. 9 illustrates an operation to be performed in a case where a call is received when the key operation lock function is in an enabled state.

### Description of Reference Numerals

- 1: portable telephone device
- 2: control part
- 21: key operation detecting unit
- 22: timer
- 23: lock control unit
- 24: authenticating unit
- 25: control unit
- 3: wireless signal processor
- 4: voice processor
- 5: camera
- 6: open/close detecting unit
- 7: memory unit
- 71: main condition memory unit
- 72: sub condition memory unit
- 73: events-acceptable-during-lock memory unit
- 8: power supply unit
- 9: reader/writer
- 10: non-contact IC card
- 11: data processing unit
- 100: first housing
- 101: antenna
- 102: receiver unit
- 103: display unit
- 200: second housing
- 201: front-face key operating unit
- 202: microphone unit
- 203: side-face key operating unit
- 300: hinge unit

## Claims

1. A portable terminal device comprising:
lock control means for determining whether the device satisfies a predetermined condition when a lock instruction is issued, enabling a key operation lock function when the device satisfies the predetermined condition, and waiting for the predetermined condition to be satisfied before enabling the key operation lock function when the device does not satisfy the predetermined condition.

2. The portable terminal device according to claim 1, **characterized in that** the predetermined condition is that a specified application program is not activated.

3. The portable terminal device according to claim 1, **characterized in that** the key operation lock function is a function to restrict acceptable events.

4. The portable terminal device according to claim 1, further comprising: lock instructing means for issuing the lock instruction to the lock control means when there is not a key operation over a certain period of time.

5. The portable terminal device according to claim 1, further comprising: lock instructing means for issuing the lock instruction to the lock control means when housings of the portable terminal device are closed.

6. The portable terminal device according to claim 1, further comprising:
an unlock key that is provided on a side face of a housing; and
authenticating means for performing an authenticating operation when the unlock key is pressed, and instructing the lock control means to disable the key operation lock function when the authenticating operation is successful.

7. A key operation lock method to be utilized in a portable terminal device, comprising the steps of:
determining whether the device satisfies a predetermined condition when a lock instruction is issued, enabling a key operation lock function when the device satisfies the predetermined condition, and waiting for the predetermined condition to be satisfied before enabling the key operation lock function when the device does not satisfy the predetermined condition.

8. The key operation lock method to be utilized in a portable terminal device according to claim 7, **characterized in that** the predetermined condition is that a specified application program is not activated.

9. A program for causing a computer to function as lock control means that performs:
determining whether the device satisfies a predetermined condition when a lock instruction is issued, enabling a key operation lock function when the device satisfies the predetermined condition, and waiting for the predetermined condition to be satisfied before enabling the key operation lock function when the device does not satisfy the predetermined condition.

10. The program according to claim 9, **characterized in that** the predetermined condition is that a specified application program is not activated.
